# EUROPÄISCHE PATENTANMELDUNG

(11) **EP 1 832 778 A2**
(43) Veröffentlichungstag der Anmeldung: **12.09.2007**
(21) Anmeldenummer: 07004227.0
(22) Anmeldetag: 01.03.2007
(51) Int. Cl.: F16D 59/02, F16D 65/14

(54) **Federdruckbremse mit einer Bremsscheibe mit voneinander abgewandten Reibflächen**

(30) Priorität: 08.03.2006 DE 102006010656
(71) Anmelder: Kendrion Binder Magnete GmbH, 78048 Villingen-Schwenningen (DE)
(72) Erfinder: Benzing, Roland, 78647 Trossingen (DE)
(74) Vertreter: Maucher, Wolfgang

(57) **Zusammenfassung**

Eine elektromagnetisch betätigbare oder öffnende Federdruckbremse (1) weist eine Bremsscheibe (4) mit beidseits angeordneten Reibflächen oder Bremsbelägen (6) auf, die mit einer Ankerscheibe (8) im Bremsfall beaufschlagt und in axialer Richtung verschoben werden können, so dass die Bremsscheibe (4) beidseits wirksam ist. Dabei ist die Bremsscheibe (4) radial innerhalb der Reibflächen oder Bremsbeläge (6) in einen Außenteil oder Außenring (11) mit den Bremsflächen oder Bremsbelägen (6) und einen Innenteil oder Innenring (10) unterteilt, wobei diese beiden Teile oder Ringe in axialer Richtung relativ zueinander verstellbar, in Umfangsrichtung aber drehfest verbunden sind. Da der die Bremsflächen oder Bremsbeläge (6) aufweisende Außenring (11) den Innenring (10) in axialer Richtung überragt, kann die Ankerscheibe bei einer Blockierung des Innenrings (10) auch den Außenring (11) alleine in axialer Richtung bewegen, so dass selbst bei einer solchen Blockierung das volle Bremsmoment erzielt wird.

## Beschreibung

Die Erfindung betrifft eine elektromagnetisch betätigbare oder öffnende Federdruckbremse mit zumindest einer gegenüber einer Welle axial verschiebbaren Bremsscheibe, die an ihren einander abgewandten Seiten bei Berührung mit Gegenflächen bremsend wirkende Reibflächen aufweist, wobei die Bremsschreibe mittels Federkraft axial beweglich und direkt oder indirekt auf oder an der abzubremsenden Welle gelagert ist und wobei eine elektromagnetische Lüfteinrichtung mit einem mittels der Federn axial beweglichen und drehfest an der Lüfteinrichtung gelagerten Anker vorgesehen ist, der die eine mit einer Reibfläche oder mit einem Bremsbelag versehene Seite der Bremsschreibe im Bremsfall reibend beaufschlagt, wobei die Lüfteinrichtung bei Stromzufuhr den Anker gegen die Kraft der Federn anzieht, um die Bremsscheibe freizugeben.

Eine vergleichbare Federdruckbremse ist aus DE 195 19 434 C1 oder aus DE 1 932 932 U bekannt und hat sich bewährt.

Für den Einsatz mit erhöhten Sicherheitsanforderungen, beispielsweise im Aufzugsbau nach DIN EN 81-1 ist eine derartige Bremse jedoch nicht geeignet, weil eine Störung in der axialen Beweglichkeit der Bremsscheibe gegenüber der abzubremsenden Welle nicht mit ausreichender Sicherheit ausgeschlossen werden kann. Bei einer derartigen Einschränkung kann eine Federdruck-Einscheibenbremse einen Bremsmomentenverlust von bis zu 50 % haben, wenn nämlich nur eine der Reibflächen noch wirksam wird. Eine solche Einschränkung der axialen Beweglichkeit kann zum Beispiel durch Fremdkörper in der mechanischen Kopplung als Klemmen auftreten, so dass die axiale Verschiebbarkeit nicht mehr vollständig sichergestellt ist. Wird dann der Anker gegen eine solche Bremsscheibe gedrückt, wird nur die zwischen Bremsscheibe und Anker befindliche Reibfläche wirksam.

Aus GB 480 917 ist eine durch einen automatischen Schalter betätigbare elektromagnetische Bremse bekannt, bei welcher ein Reibung ausübender Ring zwischen zwei Magneten axial gegenüber einer Nabenscheibe auslenkbar oder verstellbar ist, wobei die Nabenscheibe selbst an der zugehörigen Welle über ein Hülsenteil unverschieblich gehalten ist.

Aus DE 100 49 168 C2 ist eine elektromagnetische Bremse bekannt, bei welcher unterschiedliche Verklemmungsfälle durch zwei oder drei gleichzeitig wirksame Reibflächen bereinigt werden.

Es besteht deshalb die Aufgabe, eine Federdruckbremse der eingangs genannten Art zu schaffen, bei welcher die Sicherheit erhöht ist, dass im Bremsfall beide Reibflächen oder Bremsbeläge der Bremsscheibe wirksam werden, selbst wenn im Bereich der Koppelung der Bremsscheibe mit der Welle eine Störung der axialen Verschieblichkeit auftritt.

Zur Lösung dieser scheinbar widersprüchlichen Aufgabe ist die eingangs definierte Federdruckbremse dadurch gekennzeichnet, dass die Bremsscheibe durch wenigstens eine umlaufende Unterbrechung in zumindest zwei Teile, nämlich ein Innenteil und ein Außenteil, unterteilt ist und dass das Innenteil und das Außenteil relativ zueinander in axialer Richtung verschiebbar und in Umfangsrichtung drehfest miteinander verbunden sind. Ergibt sich eine Störung der Verschiebbarkeit des mit der Welle direkt oder indirekt verbundenen Innenteils, kann also dennoch das Außenteil verschoben werden, so dass die daran beidseitig angeordneten Bremsflächen oder Bremsbeläge dennoch zur Wirkung kommen. Somit ergibt sich ein redundantes System, welches auch die Anforderungen von DIN EN 81-1 beziehungsweise die Anforderungen der Sicherheit im Aufzugsbau erfüllt.

Besonders günstig ist es dabei, wenn das Außenteil relativ zu dem Innenteil gegen eine Rückstellkraft oder Federkraft verstellbar ist. Dadurch kehrt es dann automatisch im Lüftungsfall wieder in seine Ausgangsstellung zurück.

Das Außenteil der Bremsscheibe kann dabei beidseits an seinen gegenüberliegenden, quer zur Drehachse angeordneten Flächen zur Bildung der Reibflächen Reibbeläge tragen oder selbst aus einem reibenden oder bremsenden Werkstoff, also aus einem Werkstoff bestehen, aus welchem Bremsbeläge gefertigt werden. Dadurch wird sichergestellt, dass bei einer Beeinträchtigung der axialen Verstell- oder Verschiebbarkeit des Innenteils das Außenteil dennoch in Bremsposition gelangt und auch die entsprechende Bremswirkung an seinen beiden Seiten hat.

Das Außenteil kann das Innenteil zumindest im Bereich der Reibbeläge oder Reibflächen in axialer Richtung überragen und die Ankerscheibe kann im Bremsfall an diesem überragenden Bereich anliegen. Dadurch wird sichergestellt, dass die durch Federdruck axial verstellte Ankerscheibe das Außenteil früher als das Innenteil berührt und somit das Außenteil in axialer Richtung auch dann verschieben kann, wenn das Innenteil an einer axialen Verstellung oder Verschiebung gehindert ist.

Eine zweckmäßige Ausgestaltung der Erfindung, die gleichzeitig eine platzsparende Unterteilung der Bremsscheibe in Innenteil und Außenteil und die Anordnung eines Rückstellelements ermöglicht, kann darin bestehen, dass im Bereich der Unterteilung zwischen Innenteil und Außenteil außenseitig wenigstens auf einer Seite, vorzugsweise auf beiden Seiten, in axialer Richtung elastisch bewegliche und/oder federnde Positionierelemente vorgesehen sind, die die beiden Teile der Bremsscheibe in radialer Richtung ausrichten und eine Relativbewegung in axialer Richtung entgegen der Rückstellkraft des oder der Positionierelemente erlauben.

Dabei ist es besonders günstig, wenn das oder die Positionierelemente an dem Innenteil beispielsweise mittels Schrauben oder Nieten befestigt sind und diesen radial überragen und mit dem überragenden Überstand das Außenteil in axialer Richtung außenseitig beaufschlagen. Wird das Außenteil relativ zu dem Innenteil verschoben, werden also diese Positionierelemente gegenüber ihrer Befestigung an dem Innenteil ausgelenkt und können anschließend das Außenteil wieder zurückverschieben, also von einer zweiten Gegenfläche abgeben, wenn der Bremsvorgang beendet ist. Denkbar ist aber auch eine umgekehrte Anordnung, bei welcher die Positionierelemente am Außenteil befestigt sind und diesen radial nach innen überragen, um mit diesem Überstand das Innenteil zu beaufschlagen.

Eine abgewandelte Ausführungsform kann darin bestehen, dass zur axialen Positionierung des Außenteils relativ zum Innenteil insbesondere im Außenteil - gegebenenfalls aber auch im Innenteil - eingebaute und vorgespannte gummielastische Elemente, zum Beispiel O-Ringe oder Federn, insbesondere Wellenfedern, vorgesehen sind, die die entsprechende Relativverschiebung zwischen Außenteil und Innenteil gegen ihre Rückstellkraft erlauben.

Damit die unterteilte Bremsscheibe hinsichtlich ihrer Abmessungen und ihrer Betätigung weitestgehend einer einteiligen Bremsscheibe entspricht, kann es günstig sein, wenn wenigstens eine in radialer Richtung verlaufende Oberfläche des Innenteils und eine Oberfläche des Außenteils in Ausgangsstellung zumindest bereichsweise in einer gemeinsamen z.B. radialen Ebene angeordnet sind, wobei dies zweckmäßigerweise für beide Außenseiten von Außenteil und Innenteil zutrifft. Dies erleichtert es auch, die beiden Teile mit einem gemeinsamen Positionierelement zu übergreifen.

Insbesondere können das Innenteil und das Außenteil im Bereich ihrer Unterteilung, Kupplung oder Verzahnung eine übereinstimmende axiale Abmessung oder Dicke haben und in Ausgangsstellung miteinander fluchten.

Die drehfeste Verbindung oder Kupplung zwischen Innenteil und Außenteil kann in vorteilhafter Weise durch eine gegenseitige in axialer Richtung verlaufende Verzahnung oder Profilierung gebildet sein, wobei das Innenteil eine Außenverzahnung und das Außenteil eine dazu passende Innenverzahnung haben kann. Somit kann über diese Unterbrechung und Koppelung zwischen Innenteil und Außenteil ein ausreichend großes Bremsmoment übertragen werden.

Die Verbindung zwischen der Bremsscheibe und der sie tragenden Welle kann ebenfalls durch eine in axialer Richtung verlaufende Verzahnung oder Profilierung gebildet sein, so dass die Übertragung des Bremsmoments auf die Welle oder auf ein mit der Welle verbundenes Teil im störungsfreien oder auch im beeinträchtigten Fall sichergestellt ist.

Es sei noch erwähnt, dass die Bremsscheibe zwischen dem Außenteil und dem Innenteil zumindest in Sonderfällen wenigstens ein drehfest mit diesen beiden Teilen verbundenes Zwischenteil aufweisen kann, welches eine relative axiale Verschiebung zu dem Außenteil und/oder zu dem Innenteil erlaubt. Dadurch könnte die Sicherheit gegen eine Verklemmung weiter erhöht werden, weil auch im Falle einer Verklemmung im Bereich zwischen Innenteil und Außenteil durch ein solches Zwischenteil ein redundantes System gebildet würde.

Eine besonders bevorzugte Ausführungsform kann dabei vorsehen, dass die Unterbrechung zwischen Innenteil und Außenteil ringförmig oder kreisringförmig ausgebildet ist und insbesondere konzentrisch zur Welle umläuft, und dass das Innenteil insbesondere als Innenring und das Außenteil als Außenring ausgebildet sind. Dies ergibt eine besonders preiswerte Herstellung und Montage und die die Bremsscheiben bildenden Teile haben eine geometrisch möglichst einfache Form, die auch entsprechend gut bearbeitet und mit den gegenseitigen Verzahnungen versehen werden kann.

Vor allem bei Kombination einzelner oder mehrerer der vorbeschriebenen Merkmale und Maßnahmen ergibt sich eine Federdruckbremse mit beidseits wirkenden Reibflächen, die hinsichtlich der axialen Verstellung der Reibflächen im Bremsfall redundant aufgebaut ist, indem die Bremsscheibe in ein Innenteil oder einen Innenring und ein Außenteil oder einen die Bremsflächen oder Bremsbeläge tragenden Außenring unterteilt ist und diese Teile oder Ringe relativ zueinander verschiebbar, aber drehfest verbunden sind. Dadurch besteht die Möglichkeit, erheblich teuere Federdruck-Zweikreissysteme in Tandemausführung mit zwei einteiligen Reibscheiben, zwei Ankern und zwei Erregersystemen durch eine preiswertere Federdruckbremse bei dennoch gleichbleibender Sicherheit zu ersetzen. Aufgrund dieser erhöhten Sicherheit ist diese Federdruckbremse dabei auch für den Aufzugsbau geeignet.

Nachstehend ist ein Ausführungsbeispiel der Erfindung anhand der Zeichnung näher beschrieben. Es zeigt in zum Teil schematisierter Darstellung:
- Fig. 1: einen Längsschnitt durch eine elektromagnetisch zu lüftende Federdruckbremse mit Ankerscheibe und Bremsscheibe, welche erfindungsgemäß ein Innenteil und ein Außenteil bildend unterteilt ist, wobei das Außenteil die Bremsbeläge oder Reibflächen aufweist,
- Fig. 2: einen Längsschnitt der aus Innenteil und Außenteil bestehenden Bremsscheibe mit diese beiden Teile im Bereich ihrer Koppel- oder Berührstelle übergreifenden, Abdeckelemente bildenden Positionierelementen, die bei einer Relativverstellung des Außenteils gegenüber dem Innenteil in axialer Richtung eine Rückstellkraft erzeugen,
- Fig. 3: eine Ansicht der in Innenteil und Außenteil unterteilten Bremsscheibe mit einem die Trenn- oder Berührstelle dieser Teile abdeckenden und übergreifenden Positionierelement sowie
- Fig. 4: einen Querschnitt der zweigeteilten Bremsscheibe durch die als drehfeste Verbindung vorgesehene gegenseitige Verzahnung von Innenteil und Außenteil, wobei auch die innere Verzahnung des Innenteils zur drehfesten Verbindung mit einer zu bremsenden Welle sichtbar ist.

Eine im Ganzen mit 1 bezeichnete elektromagnetisch betätigbare oder öffnende Federdruckbremse, im Folgenden auch kurz "Federdruckbremse 1" oder "Bremse 1" genannt, weist analog DE 195 19 434 C1 ein Magnetgehäuse 2 und eine darin angeordnete Magnetspule 3 als Lüfteinrichtung auf.

Darüber hinaus gehört zu der Bremse 1 eine im Ganzen mit 4 bezeichnete Bremsscheibe, die an ihren einander abgewandten, radial zu einer abzubremsenden Welle 5 verlaufenden Seiten bei Berührung mit Gegenflächen bremsend wirkende Reibflächen aufweist, welche im Ausführungsbeispiel durch die Seitenflächen der Bremsscheibe 4 in axialer Richtung etwas überragende Bremsbeläge 6 gebildet werden. Diese Bremsscheibe 4 ist mittels der Kraft von axial wirkenden Federn 7, im Ausführungsbeispiel Schraubenfedern 7, axial beweglich und direkt oder indirekt wiederum analog DE 195 19 434 C1 auf der abzubremsenden Welle 5 gelagert.

Die schon erläuterte elektromagnetische Lüfteinrichtung weist einen mittels der Federn 7 axial beweglichen und mittels Blattfedern 15 drehfest an dieser Lüfteinrichtung und dem Magnetgehäuse 2 gelagerten Anker 8 auf, der die eine mit einer Reibfläche oder mit einem Bremsbelag 6 versehene Seite der Bremsscheibe 4 im Bremsfall reibend beaufschlagt und die Bremsscheibe 4 mit ihrem weiteren Bremsbelag 6 gegen eine weitere, im Ausführungsbeispiel nicht dargestellte Gegenfläche drückt, wobei die Lüfteinrichtung bei Stromzufuhr diesen scheibenförmigen Anker 8 gegen die Kraft der Federn 7 anzieht, um die Bremsscheibe 4 freizugeben, so dass bei Stromfluss keine Bremswirkung besteht, während bei Stromausfall der Anker 8 gegen die Bremsscheibe 4 und dadurch auch diese wiederum gegen eine weitere Gegenfläche axial verschoben wird und ein Bremsmoment auf beiden Seiten und an beiden Bremsbelägen 6 erzeugt. Die zweite, nicht dargestellte, auf der dem Anker 8 abgewandten Seite wirksame Gegenfläche könnte beispielsweise eine Anbaufläche eines Motors sein.

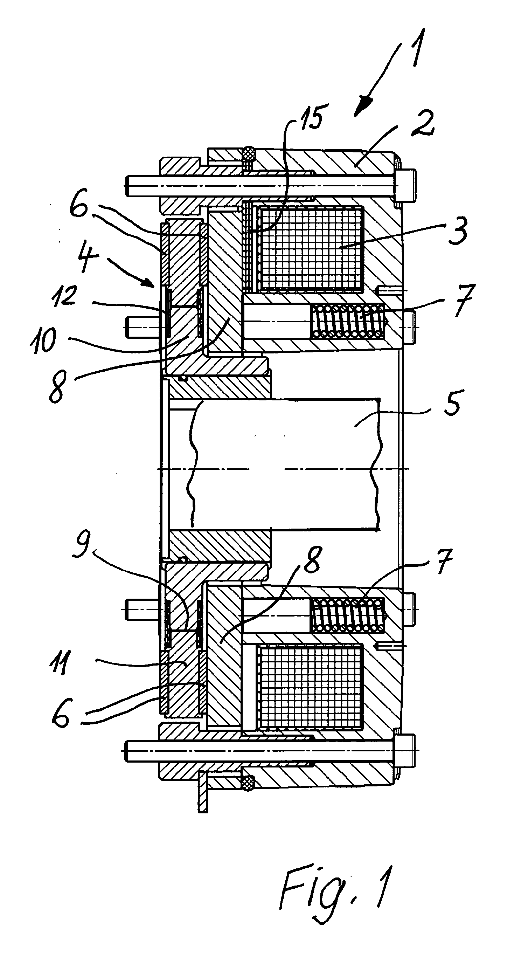

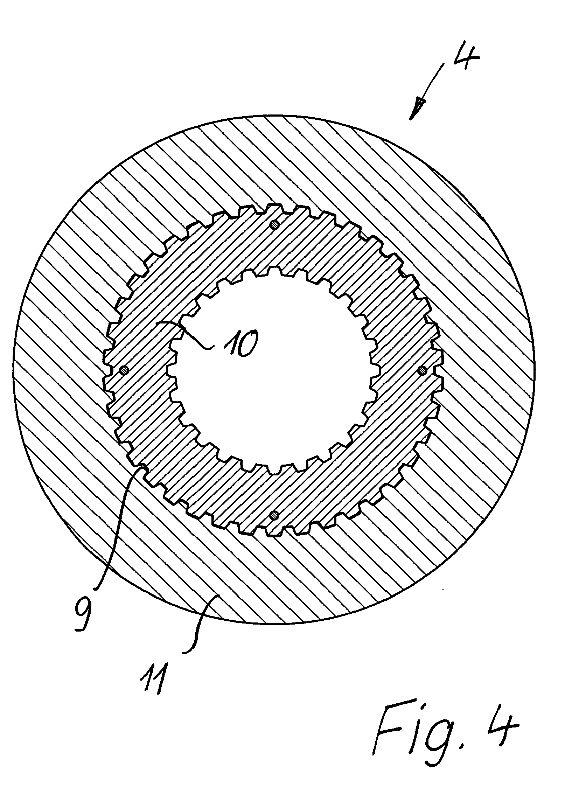

Bei gemeinsamer Betrachtung der Figuren 1 bis 4 und dabei vor allem der Figur 4 erkennt man, dass die Bremsscheibe 4 durch eine etwa umlaufende Unterbrechung 9 in zwei Teile, nämlich ein Innenteil 10 und ein Außenteil 11 unterteilt ist, wobei die Unterbrechung beziehungsweise die gegenseitige Beaufschlagung von Innenteil 10 und Außenteil 11 so gestaltet sind, dass das Innenteil 10 und das Außenteil 11 relativ zueinander in axialer Richtung verschiebbar und in Umfangsrichtung drehfest miteinander verbunden sind.

Dabei ist im Ausführungsbeispiel vorgesehen, dass die Unterbrechung 9 ringförmig oder kreisringförmig ausgebildet ist und außerdem in diesem Falle konzentrisch zur Welle 5 umläuft. Somit sind das Innenteil 10 als Innenring und das Außenteil 11 als Außenring ausgebildet. Im Folgenden sind deshalb die Teile 10 und 11 als "Innenring 10" und als "Außenring 11" bezeichnet.

Der Außenring 11 ist dabei relativ zu dem Innenring 10 in noch näher zu erläuternder Weise gegen eine Rückstell- oder Federkraft verstellbar, die aber in beliebiger Weise aufgebracht werden kann.

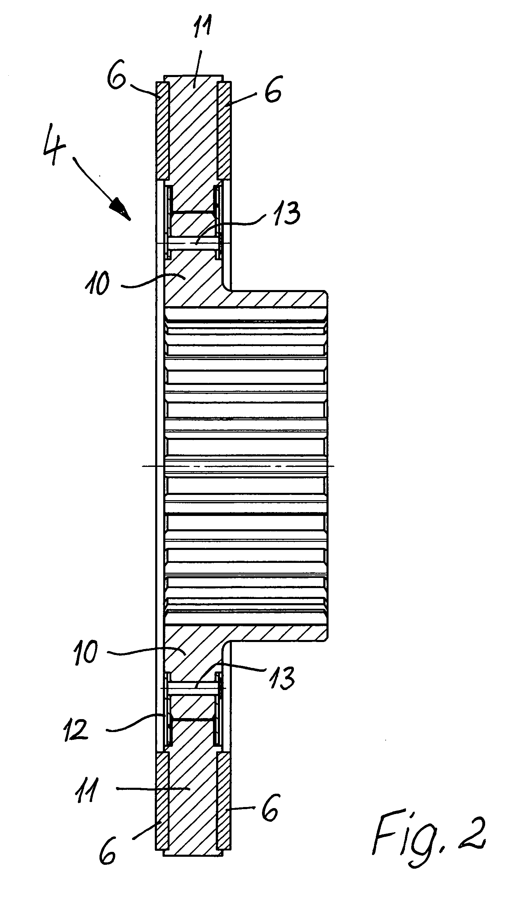

In den Figuren 1 und 2 erkennt man, dass der Außenring 11 der Bremsscheibe 4 beidseits an seinen einander gegenüberliegenden beziehungsweise voneinander abgewandten, quer zur Drehachse und zur Welle 5 angeordneten Flächen zur Bildung der Reibflächen Reib- oder Bremsbeläge 6 trägt. Gegebenenfalls könnte er selbst aus einem reibenden oder bremsenden Werkstoff bestehen. Dabei erkennt man gleichzeitig, dass der Außenring 11 den Innenring 10 im Bereich dieser Bremsbeläge 6 beziehungsweise mit einem Teil der Dicke dieser Bremsbeläge 6 in axialer Richtung überragt und die Ankerscheibe 8 im Bremsfall an diesem überragenden Bereich anliegt, so dass die axialen Verstellkräfte des Ankers 8 über diesen überstehenden Bereich des Außenrings 11 in die Bremsscheibe 4 eingeleitet werden.

Es leuchtet ein, dass im Falle einer Verklemmung der verschiebbaren Lagerung dieser Bremsscheibe 4 auf der Welle 5 dann der in axialer Richtung relativ zu dem Innenring 10 verschiebbare Außenring 11 dennoch von dem Anker 8 in axialer Richtung bewegt werden kann, wenn die Federn 7 beispielsweise bei Stromausfall zu der Magnetspule 3 wirksam werden. Somit ist durch die Unterteilung der Bremsscheibe 4 und die axiale Verstellbarkeit des Außenrings 11 relativ zum Innenring 10 ein redundantes Bremssystem geschaffen.

In den Figuren 1 bis 3 ist dargestellt, dass im Bereich der Unterteilung oder Unterbrechung 9 zwischen Innenring 10 und Außenring 11 außenseitig - im Ausführungsbeispiel auf beiden Seiten - in axialer Richtung elastisch bewegliche und/oder federnde, im Ganzen mit 12 bezeichnete Positionierelemente vorgesehen sind, die die beiden Teile der Bremsscheibe 4 in radialer Richtung ausrichten, also im Normalfall in ihrer zueinander fluchtenden Lage halten und die erwähnte Relativbewegung in axialer Richtung entgegen der Rückstellkraft des oder der Positionierelemente 12 erlauben.

Dabei erkennt man in Fig. 2, dass die Positionierelemente 12 an dem Innenring 10 mittels eines durchgehenden Befestigungselements 13, zum Beispiel einer Niete, befestigt sind und den Innenring 10 radial überragen und mit dem überragenden Bereich oder Überstand den Außenring 11 in axialer Richtung außenseitig beaufschlagen.

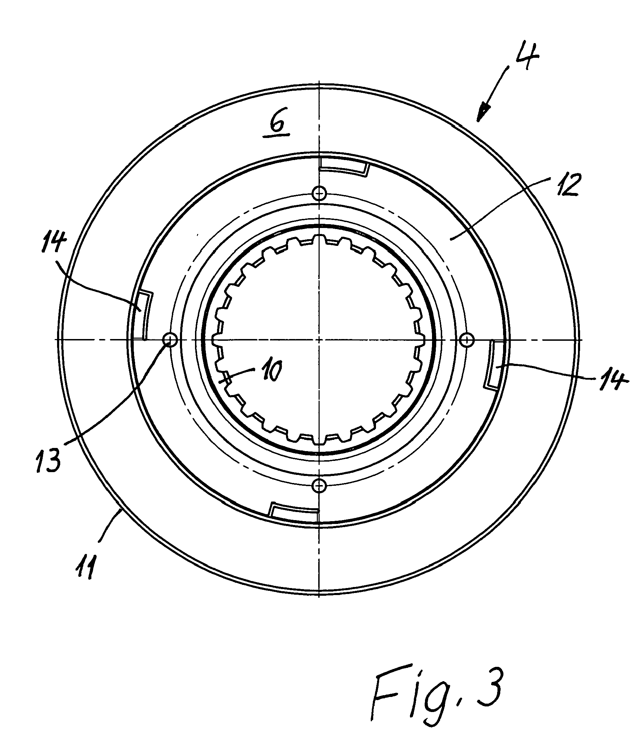

In Fig. 3 erkennt man an diesem ein Abdeckelement bildenden Positionierelement 12 im Außenrandbereich angeordnete, teilweise ausgeschnittene oder ausgestanzte Federzungen 14, die also im Bereich des Außenrings 11 angeordnet sind und dort mit an dem Außenring befindlichen, in der Schnittebene nicht erkennbaren Nocken oder Vorsprüngen derart zusammenwirken, dass eine axiale Verschiebung des Außenrings 11 diese Federzungen 14 auslenkt, so dass diese zu dem Positionierelement 12 gehörenden Bereich oder Federzungen 14 die federnde Rückstellkraft bewirken.

In den Figuren 1 und 2 sieht man, dass in radialer Richtung innerhalb der Bremsbeläge 11 die Seiten- oder Oberflächen des Innenrings 10 und die entsprechenden Oberflächen des Außenrings 11 in Ausgangsstellung in einer gemeinsamen Ebene angeordnet sind, in welcher sie im Normalfall von dem Positionierelement 12 gehalten werden.

Dabei ist die drehfeste Verbindung oder Kupplung im Bereich der Unterbrechung 9 zwischen Innenring 10 und Außenring 11 gemäß Fig. 4 durch eine gegenseitige, in axialer Richtung verlaufende Verzahnung oder Profilierung gebildet, wobei der Innenring 10 eine Außenverzahnung und der Außenring 11 eine dazu passende Innenverzahnung hat, so dass ein Bremsmoment von dem Außenring 11 über diese Verzahnung auf den Innenring 10 und dadurch über die kraftschlüssige Verbindung zwischen der Bremsscheibe 4 beziehungsweise des Innenrings 10 auf die Welle 5 übertragen werden kann, wobei diese Verbindung gemäß Fig. 3 ebenfalls als eine in axialer Richtung verlaufende Verzahnung oder Profilierung ausgebildet ist. Somit kann ein an dem Außenring 11 auftretendes Bremsmoment über die beiden Verzahnungen mit üblicher Sicherheit auf die Welle 5 übertragen werden, wobei aber im Falle einer Verklemmung im Bereich der Verzahnung zwischen Innenring 10 und Welle 5, die eine axiale Verstellung im Bremsfall an dieser Stelle verhindert, dennoch die beidseitige Bremswirkung an der Bremsscheibe 4 erreicht wird, weil dann der Außenring 11 an der Unterbrechung 9 axial verschoben werden kann, so dass trotzdem die beidseitige Bremswirkung an der Bremsscheibe 4 erzielt wird.

Dabei erkennt man in den Figuren 1 und 2, dass der Innenring 10 und der Außenring 11 im Bereich ihrer Unterteilung oder Unterbrechung 9, also im Bereich der Kupplung oder Verzahnung, eine übereinstimmende axiale Abmessung oder Dicke haben und in Ausgangsstellung miteinander fluchten. Somit kann das die Federzungen 14 aufweisende Positionierelement 12 im Normalfall scheibenförmig in einer radialen Ebene angeordnet sein, aus welcher es erforderlichenfalls zumindest im Bereich der Federzungen 14 elastisch, eine Rückstellkraft erzeugend ausgelenkt werden kann.

Durch die axiale Beweglichkeit des radial außen liegenden Außenrings 11 relativ zu dem Innenring 10 ist also sichergestellt, dass an den beiden Reib- oder Bremsbelägen 6 das volle Bremsmoment erzeugt und über den Innenring 10 auf die Welle 5 übertragen wird, selbst wenn es zum Beispiel durch Fremdkörper an der radial innenliegenden Kopplungseinheit oder Verzahnung zwischen Innenring 10 und Welle 5 zu einer Blockierung kommt . Durch die Unterteilung der Bremsscheibe 4 in einen Innenring 10 und einen Außenring 11 und die formschlüssige Verbindung zwischen diesen beiden Teilen, die aber eine axiale Relativbewegung erlaubt, ist also die Bremse 1 redundant und hat eine entsprechend große Sicherheit, so dass sie beispielsweise auch im Aufzugsbau eingesetzt werden kann und den Anforderungen der Sicherheit gemäß DIN EN 81-1 genügen kann.

Die elektromagnetisch betätigbare oder öffnende Federdruckbremse 1 weist eine Bremsscheibe 4 mit beidseits angeordneten Reibflächen oder Bremsbelägen 6 auf, die mit einer Ankerscheibe 8 im Bremsfall beaufschlagt und in axialer Richtung verschoben werden können, so dass die Bremsscheibe 4 beidseits wirksam ist. Dabei ist die Bremsscheibe 4 radial innerhalb der Reibflächen oder Bremsbeläge 6 in einen Außenteil oder Außenring 11 mit den Bremsflächen oder Bremsbelägen 6 und einen Innenteil oder Innenring 10 unterteilt, wobei diese beiden Teile oder Ringe in axialer Richtung relativ zueinander verstellbar, in Umfangsrichtung aber drehfest verbunden sind. Da der die Bremsflächen oder Bremsbeläge 6 aufweisende Außenring 11 den Innenring 10 in axialer Richtung überragt, kann die Ankerscheibe bei einer Blockierung des Innenrings 10 auch den Außenring 11 alleine in axialer Richtung bewegen, so dass selbst bei einer solchen Blockierung das volle Bremsmoment erzielt wird.

## Patentansprüche

1. Elektromagnetisch betätigbare oder öffnende Federdruckbremse (1) mit zumindest einer gegenüber einer Welle (5) axial verschiebbaren Bremsscheibe (4), die an ihren einander abgewandten Seiten bei Berührung mit Gegenflächen bremsend wirkende Reibflächen aufweist, wobei die Bremsscheibe (4) mittels Federkraft axial beweglich und direkt oder indirekt auf oder an der abzubremsenden Welle (5) gelagert ist und wobei eine elektromagnetische Lüfteinrichtung mit einem mittels der Federn (7) axial beweglichen und drehfest an der Lüfteinrichtung gelagerten Anker (8) vorgesehen ist, der die eine mit einer Reibfläche oder mit einem Bremsbelag (6) versehene Seite der Bremsscheibe (4) im Bremsfall reibend beaufschlagt, wobei die Lüfteinrichtung bei Stromzufuhr den Anker (8) gegen die Kraft der Federn (7) anzieht, um die Bremsscheibe (4) freizugeben, **dadurch gekennzeichnet, dass** die Bremsscheibe (4) durch wenigstens eine umlaufende Unterbrechung (9) in zumindest zwei Teile, nämlich ein Innenteil (10) und ein Außenteil (11), unterteilt ist, und dass das Innenteil (10) und das Außenteil (11) relativ zueinander in axialer Richtung verschiebbar und in Umfangsrichtung drehfest miteinander verbunden sind.

2. Federdruckbremse nach Anspruch 1, **dadurch gekennzeichnet, dass** das Außenteil (11) relativ zu dem Innenteil (10) gegen eine Rückstellkraft oder Federkraft verstellbar ist.

3. Federdruckbremse nach Anspruch 1 oder 2, **dadurch gekennzeichnet, dass** das Außenteil (11) der Bremsscheibe (4) beidseits an seinen einander gegenüberliegenden, quer zur Drehachse angeordneten Flächen zur Bildung der Reibflächen Bremsbeläge (6) trägt oder selbst aus einem reibenden oder bremsenden Werkstoff besteht.

4. Federdruckbremse nach einem der Ansprüche 1 bis 3, **dadurch gekennzeichnet, dass** das Außenteil (11) das Innenteil (10) zumindest im Bereich der Bremsbeläge (6) oder Reibflächen in axialer Richtung überragt und die Ankerscheibe im Bremsfall an diesem überragenden Bereich anliegt.

5. Federdruckbremse nach einem der Ansprüche 1 bis 4, **dadurch gekennzeichnet, dass** im Bereich der Unterteilung oder Unterbrechung (9) zwischen Innenteil (10) und Außenteil (11) außenseitig wenigstens auf seiner Seite, vorzugsweise auf beiden Seiten, in axialer Richtung elastisch bewegliche und/oder federnde Positionierelemente (12) vorgesehen sind, die die beiden Teile der Bremsscheibe (4) in radialer Richtung ausrichten und eine Relativbewegung in axialer Richtung entgegen der Rückstellkraft des oder der Positionierelemente (12) erlauben.

6. Federdruckbremse nach einem der Ansprüche 1 bis 5, **dadurch gekennzeichnet, dass** das oder die Positionierelemente (12) an dem Innenteil (10) befestigt sind und diesen radial überragen und mit dem überragenden Überstand das Außenteil (11) in axialer Richtung außenseitig beaufschlagen.

7. Federdruckbremse nach einem der Ansprüche 1 bis 6, **dadurch gekennzeichnet, dass** die Positionierelemente (12) radial außen liegende, teilweise ausgeschnittene Federzungen (14) zur Erzeugung der Rückstellkraft zwischen Außenteil (11) und Innenteil (10) aufweisen.

8. Federdruckbremse nach einem der Ansprüche 1 bis 7, **dadurch gekennzeichnet, dass** zur axialen Positionierung des Außenteils (11) relativ zum Innenteil (10) insbesondere im Außenteil (11) eingebaute und vorgespannte gummielastische Elemente, zum Beispiel O-Ringe oder Federn, insbesondere Wellenfedern, vorgesehen sind.

9. Federdruckbremse nach einem der Ansprüche 1 bis 8, **dadurch gekennzeichnet, dass** wenigstens eine in radialer Richtung verlaufende Oberfläche des Innenteils (10) und eine Oberfläche des Außenteils (11) in Ausgangsstellung zumindest bereichsweise, insbesondere im Bereich des oder der Positionierelemente (12), in einer gemeinsamen Ebene angeordnet sind.

10. Federdruckbremse nach einem der Ansprüche 1 bis 9, **dadurch gekennzeichnet, dass** die drehfeste Verbindung oder Kupplung im Bereich der Unterbrechung (9) zwischen Innenteil (10) und Außenteil (11) durch eine gegenseitige, in axialer Richtung verlaufende Verzahnung oder Profilierung gebildet ist, wobei das Innenteil (10) insbesondere eine Außenverzahnung und das Außenteil (11) eine dazu passende Innenverzahnung hat.

11. Federdruck nach einem der Ansprüche 1 bis 10, **dadurch gekennzeichnet, dass** Innenteil (10) und Außenteil (11) im Bereich ihrer Unterbrechung (9), also im Bereich ihrer Kupplung oder Verzahnung, eine übereinstimmende axiale Abmessung oder Dicke haben und in Ausgangsstellung miteinander fluchten.

12. Federdruckbremse nach einem der Ansprüche 1 bis 11, **dadurch gekennzeichnet, dass** die Verbindung zwischen der Bremsscheibe (4) oder dem Innenteil (10) und der sie tragenden Welle (5) durch eine in axialer Richtung verlaufende Verzahnung oder Profilierung gebildet ist.

13. Federdruckbremse nach einem der Ansprüche 1 bis 12, **dadurch gekennzeichnet, dass** die Bremsscheibe (4) zwischen dem Außenteil (11) und dem Innenteil (10) zumindest ein drehfest mit diesen verbundenes Zwischenteil aufweist, welches eine relative axiale Verschiebung zu dem Außenteil (11) und/oder zu dem Innenteil (10) erlaubt.

14. Federdruckbremse nach einem der vorstehenden Ansprüche, **dadurch gekennzeichnet, dass** die Unterbrechung (9) zwischen Innenteil (10) und Außenteil (11) ringförmig oder kreisringförmig ausgebildet ist und insbesondere konzentrisch zur Welle (5) umläuft, und dass das Innenteil (10) insbesondere als Innenring und das Außenteil (11) als Außenring ausgebildet sind.
